# EUROPÄISCHE PATENTANMELDUNG

(11) **EP 3 196 671 A2**
(43) Veröffentlichungstag der Anmeldung: **26.07.2017**
(21) Anmeldenummer: 17152149.5
(22) Anmeldetag: 19.01.2017
(51) Int. Cl.: G01S 15/93, G01S 7/521, G10K 9/13, B06B 1/04, G10K 11/00, G01S 7/52, G10K 9/122, B06B 1/06, G01S 15/87

(54) **ULTRASCHALLSENSOR FÜR EIN KRAFTFAHRZEUG MIT WASSERUNDURCHLÄSSIGER ABDECKEINRICHTUNG, FAHRERASSISTENZSYSTEM SOWIE KRAFTFAHRZEUG**

(30) Priorität: 21.01.2016 DE 102016101007
(71) Anmelder: Valeo Schalter und Sensoren GmbH, 74321 Bietigheim-Bissingen (DE)
(72) Erfinder: Schuler, Thomas, 74321 Bietigheim-Bissingen (DE)

(57) **Zusammenfassung**

Die Erfindung betrifft einen Ultraschallsensor (4) für ein Kraftfahrzeug, mit einer Wandlereinrichtung (12) zum Aussenden und/oder Empfangen eines Ultraschallsignals und mit einem Gehäuse (9), wobei die Wandlereinrichtung (12) in einem Innenraum (11) des Gehäuses (9) angeordnet ist, wobei das Gehäuse (9) eine Öffnung (17) aufweist, welche von einer Abdeckeinrichtung (18) verschlossen ist, wobei die Abdeckeinrichtung (18) wasserundurchlässig ausgebildet ist und wobei die Wandlereinrichtung (12) das Ultraschallsignal durch die Abdeckeinrichtung (18) hindurch aussendet und/oder empfängt.

## Beschreibung

Die vorliegende Erfindung betrifft einen Ultraschallsensor für ein Kraftfahrzeug mit einer Wandlereinrichtung zum Aussenden und/oder Empfangen eines Ultraschallsignals und mit einem Gehäuse, wobei die Wandlereinrichtung in einem Innenraum des Gehäuses angeordnet ist. Darüber hinaus betrifft die vorliegende Erfindung ein Fahrerassistenzsystem mit zumindest einem solchen Ultraschallsensor. Schließlich betrifft die vorliegende Erfindung ein Kraftfahrzeug mit einem derartigen Fah rerassistenzsystem.

Das Interesse richtet sich vorliegend auf Ultraschallsensoren für Kraftfahrzeuge. Derartige Ultraschallsensoren können beispielsweise in Fahrerassistenzsystemen für Kraftfahrzeuge eingesetzt werden, welche den Fahrer beim Einparken des Kraftfahrzeugs unterstützen. Mit den Ultraschallsensoren können Objekte in der Umgebung des Kraftfahrzeugs erfasst werden. Insbesondere kann mithilfe der Ultraschallsensoren ein Abstand zwischen dem Kraftfahrzeug und den Objekten bestimmt werden. Zu diesem Zweck sendet der Ultraschallsensor ein Ultraschallsignal aus, welches an Objekten beziehungsweise Hindernissen in der Umgebung des Kraftfahrzeugs reflektiert wird und wieder zurück zu dem Ultraschallsensor gelangt. Anhand der Laufzeit zwischen dem Aussenden des Ultraschallsignals und dem Empfangen des von dem jeweiligen Objekt reflektierten Ultraschallsignals kann dann die Entfernung zwischen dem Kraftfahrzeug und dem jeweiligen Objekt ermittelt werden.

Aus dem Stand der Technik sind Ultraschallsensoren bekannt, welche eine Membran aufweisen, die beispielsweise aus Aluminium gefertigt sein kann und topfförmig ausgebildet ist. Ferner weisen die Ultraschallsensoren üblicherweise eine entsprechende Wandlereinrichtung auf, die beispielsweise ein piezoelektrisches Element umfassen kann. Mithilfe dieser Wandlereinrichtung kann die Membran während einer Sendephase, in welcher das Ultraschallsignal ausgesendet wird, zu mechanischen Schwingungen angeregt werden. In einer anschließenden Ausschwingphase schwingt dann die Membran beziehungsweise der Membranboden aus. In einer sich an die Ausschwingphase anschließende Empfangsphase kann dann das von dem Objekt reflektierte Ultraschallsignal empfangen werden, welches auf die Membran trifft. Das reflektierte Ultraschallsignal regt die Membran zu Schwingungen an, welche wiederum mit der Wandlereinrichtung erfasst werden kann.

Bei bekannten Ultraschallsensoren, die eine Aluminiummembran aufweisen, besteht allerdings der Nachteil, dass diese während der Ausschwingphase gewisse Zeit ausschwingen müssen und erst dann die reflektierten Ultraschallsignale während der Empfangsphase empfangen werden können. Durch die verhältnismäßig lange Dauer der Ausschwingphase wird eine Messung im Nahbereich verhindert. Eine gegenphasige Ansteuerung der Membran während der Ausschwingphase ist aufgrund der Masse und der Trägheit der Membran meist nicht möglich. Des Weiteren weist die topfförmige Membran üblicherweise eine bestimmte Resonanzfrequenz, beispielsweise etwa 50 kHz, auf. Falls der Ultraschallsensor mit einer von dieser Resonanzfrequenz abweichenden Frequenz betrieben werden soll, ist dies nur mit hohen Verlusten beziehungsweise mit einem schlechten Wirkungsgrad möglich.

Hierzu beschreibt die DE 100 18 807 B4 eine Ultraschall-Abstandsmesseinrichtung für elektronische Einparkhilfen. Hierbei ist es vorgesehen, dass die Ultraschallwandler zusammen mit einem Steuergerät in einem gemeinsamen Gehäuse untergebracht sind. Ferner sind Schallleiter vorgesehen, welche dazu dienen, Ultraschallsignale von dem Steuergerät zu jeweiligen Ein-/Auskoppelseiten zu übertragen. Dabei kann es ferner vorgesehen sein, dass die Schallleiter an der Ein-/Auskoppelseite zum Schutz gegen Fremdpartikel eine Abdeckung aufweisen. Diese Abdeckung kann zum Beispiel als schließende Membran, als siebartige Abdeckung oder als luftdurchlässige, aber wasserdichte Folie ausgebildet sein.

Es ist Aufgabe der vorliegenden Erfindung, eine Lösung aufzuzeigen, wie ein Ultraschallsensor für ein Kraftfahrzeug dynamischer betrieben werden kann.

Diese Aufgabe wird erfindungsgemäß durch einen Ultraschallsensor, durch ein Fahrerassistenzsystem sowie durch ein Kraftfahrzeug gemäß den Merkmalen der jeweiligen unabhängigen Ansprüche gelöst. Vorteilhafte Ausführungen der Erfindung sind Gegenstand der abhängigen Ansprüche.

In einer Ausgestaltung umfasst ein Ultraschallsensor für ein Kraftfahrzeug bevorzugt eine Wandlereinrichtung zum Aussenden und/oder Empfangen eines Ultraschallsignals. Darüber hinaus umfasst der Ultraschallsensor insbesondere ein Gehäuse, wobei die Wandlereinrichtung in einem Innenraum des Gehäuses angeordnet ist. Das Gehäuse weist ferner bevorzugt eine Öffnung auf, welche von einer Abdeckeinrichtung verschlossen ist, welche insbesondere wasserundurchlässig ausgebildet ist. Dabei ist es bevorzugt vorgesehen, dass die Wandlereinrichtung das Ultraschallsignal durch die Abdeckeinrichtung hindurch aussendet und/oder empfängt.

Ein erfindungsgemäßer Ultraschallsensor für ein Kraftfahrzeug umfasst eine Wandlereinrichtung zum Aussenden und/oder Empfangen eines Ultraschallsignals. Darüber hinaus umfasst der Ultraschallsensor ein Gehäuse, wobei die Wandlereinrichtung in einem Innenraum des Gehäuses angeordnet ist. Das Gehäuse weist ferner eine Öffnung auf, welche von einer Abdeckeinrichtung verschlossen ist, wobei die Abdeckeinrichtung wasserundurchlässig ausgebildet ist. Dabei ist es ferner vorgesehen, dass die Wandlereinrichtung das Ultraschallsignal durch die Abdeckeinrichtung hindurch aussendet und/oder empfängt.

Der Ultraschallsensor kann in einem Kraftfahrzeug, insbesondere einem Personenkraftwagen, eingesetzt werden. Beispielsweise kann der Ultraschallsensor Teil eines Fahrerassistenzsystems sein, mit dem Objekte beziehungsweise Hindernisse in der Umgebung des Kraftfahrzeugs erkannt werden. Der Ultraschallsensor umfasst die Wandlereinrichtung, mit der ein Ultraschallsignal ausgesendet werden kann. Zu diesem Zweck kann die Wandlereinrichtung beispielsweise zu mechanischen Schwingungen angeregt werden. Ferner kann die Wandlereinrichtung dazu dienen, ein Ultraschallsignal zu empfangen. Ein zu empfangendes Ultraschallsignal kann beispielsweise ein Ultraschallsignal sein, welches zunächst von der Wandlereinrichtung ausgesendet wurde und anschließend von einem Objekt in der Umgebung des Kraftfahrzeugs zurück zu dem Ultraschallsensor reflektiert wurde. Hierbei kann es beispielsweise vorgesehen sein, dass das reflektierte Ultraschallsignal die Wandlereinrichtung zu mechanischen Schwingungen anregt, welche entsprechend erfasst werden können. Der Ultraschallsensor weist ferner ein Gehäuse auf, das beispielsweise aus einem Kunststoff gebildet sein kann. Dabei ist die Wandlereinrichtung in dem Innenraum des Gehäuses angeordnet.

Erfindungsgemäß ist es vorgesehen, dass das Gehäuse eine Öffnung aufweist, welche mittels der Abdeckeinrichtung verschlossen ist. Dabei sind die Wandlereinrichtung und/oder das Gehäuse derart ausgebildet, dass die Wandlereinrichtung das Ultraschallsignal durch die Abdeckeinrichtung hindurch aussendet. Alternativ oder zusätzlich kann es vorgesehen sein, dass die Wandlereinrichtung das von dem Objekt reflektierte Ultraschallsignal durch die Abdeckeinrichtung hindurch empfängt. Mit anderen Worten ist die Abdeckeinrichtung für das Ultraschallsignal durchlässig. Das ausgesendete und/oder das zu empfangende Ultraschallsignal kann also durch die Abdeckeinrichtung hindurch übertragen werden. Dabei ist es insbesondere vorgesehen, dass die Wandlereinrichtung und die Abdeckeinrichtung nicht mechanisch miteinander verbunden sind. Die Wandlereinrichtung und die Abdeckeinrichtung können beabstandet zueinander angeordnet sein. Dies bringt den Vorteil mit sich, dass die Wandlereinrichtung im Vergleich zu aus dem Stand der Technik bekannten Wandlereinrichtungen, welche beispielsweise eine topfförmige Aluminiummembran aufweisen, eine geringere Trägheit aufweisen. Dies bedeutet, dass die Wandlereinrichtung beispielsweise nach dem Aussenden des Ultraschallsignals nur eine verhältnismäßig kurze Ausschwingzeit benötigt. Dies ermöglicht es zudem, Objekte im Nahbereich zu erfassen.

Die Abdeckeinrichtung ist zudem wasserundurchlässig ausgebildet. Mit anderen Worten ist die Abdeckeinrichtung aus einem Material gefertigt, welches für Wasser undurchlässig ist. Die Abdeckeinrichtung kann also semi-permeabel ausgebildet sein. Dies bedeutet insbesondere, dass diese für das Ultraschallsignal durchlässig ist aber Wasser nicht durch die Abdeckeinrichtung dringen kann. Zudem kann es vorgesehen sein, dass die Abdeckeinrichtung aus einem Material gefertigt ist, welches für Staub oder Schmutzpartikel undurchlässig ist. Zudem kann die Abdeckeinrichtung dazu dienen, die Wandlereinrichtung vor Steinschlag zu schützen. Somit kann die Wandlereinrichtung vor Umwelteinflüssen geschützt werden.

Bevorzugt ist die Abdeckeinrichtung im Wesentlichen senkrecht zu einer Hauptsenderichtung angeordnet, entlang welcher sich das von der Wandlereinrichtung ausgesendete Ultraschallsignal ausbreitet. Der Ultraschallsensor kann eine entsprechende Senderichtcharakteristik aufweisen. Ferner kann der Ultraschallsensor eine Hauptsenderichtung aufweisen. Diese kann sich beispielsweise im Wesentlichen senkrecht zu einer Abstrahlfläche der Wandlereinrichtung erstrecken. Dabei ist es vorgesehen, dass die Abdeckeinrichtung im Wesentlichen senkrecht zu dieser Hauptsenderichtung angeordnet ist. Die Abdeckeinrichtung kann beispielsweise im Wesentlichen plattenförmig ausgebildet sein. Somit kann das ausgesendete Ultraschallsignal besonders verlustarm durch die Abdeckeinrichtung hindurch ausgesendet werden. Ferner kann das Ultraschallsignal besonders verlustarm durch die Abdeckeinrichtung hindurch empfangen werden.

In einer weiteren Ausführungsform ist die Abdeckeinrichtung aus einem Material gefertigt, welches Polytetrafluorethylen, insbesondere expandiertes Polytetrafluorethylen, umfasst. Polytetrafluorethylen (PTFE) ist ein teilkristallines Polymer, welches Fluor und Kohlenstoff umfasst. Insbesondere ist die Abdeckeinrichtung aus expandiertem Polytetrafluorethylen (ePTFE) gebildet. Hierbei werden die PTFE-Fasern während der Herstellung orientiert, wodurch sich verbesserte Festigkeits- und Kaltflusseigenschaften ergeben. Somit kann eine Abdeckeinrichtung bereitgestellt werden, welche beispielsweise für Wasserdampf durchlässig ist, aber für Wasser in flüssiger Form undurchlässig ist.

Bevorzugt ist die Abdeckeinrichtung als Folie ausgebildet. Wie bereits erläutert, kann die Abdeckeinrichtung aus ePTFE gebildet sein. Bevorzugt kann die Dicke der Folie geringer als 5 mm, insbesondere geringer als 1 mm, besonders bevorzugt geringer als 0,5 mm, sein. Das ePTFE, welches als Folie beziehungsweise als Membran ausgebildet ist, erlaubt einen schnellen Durchfluss von Gasmolekülen beziehungsweise Luft, während sie gleichzeitig das Eindringen von Wasser und Feststoffen verhindert. Zudem weist eine derart ausgestaltete Folie beziehungsweise Membran eine geringe Dämpfung für das Ultraschallsignal auf.

In einer weiteren Ausführungsform umfasst die Wandlereinrichtung ein piezoelektrisches Element. Dabei kann es vorgesehen sein, dass die Wandlereinrichtung vollständig durch das piezoelektrische Element gebildet ist. An dem piezoelektrischen Element kann eine elektrische Spannung angelegt werden. Somit kann es zum Aussenden des Ultraschallsignals zu mechanischen Schwingungen angeregt werden. Wenn das piezoelektrische Element durch das reflektierte Ultraschallsignal zu mechanischen Schwingungen angeregt wird, wird eine elektrische Wechselspannung generiert. Auf diese Weise kann das von dem Objekt reflektierte Ultraschallsignal einfach detektiert werden. Dabei ist es insbesondere vorgesehen, dass das piezoelektrische Element nicht mit einer Membran verbunden ist beziehungsweise dass die Wandlereinrichtung keine Membran aufweist. Dies ermöglicht es, eine Wandlereinrichtung bereitzustellen, die eine hohe Dynamik aufweist.

Gemäß einer weiteren Ausführungsform umfasst die Wandlereinrichtung einen Elektromagneten und eine Membran, welche mit dem Elektromagneten verbunden ist. Mit anderen Worten kann die Wandlereinrichtung nach Art eines Lautsprechers ausgebildet sein. Der Elektromagnet kann nach dem Tauchspulenprinzip ausgebildet sein und die Membran entsprechend bewegen. Die Membran kann beispielsweise aus einem Metallblech, welches beispielsweise aus Aluminium oder Kupfer besteht, gebildet sein. Somit weist eine derartige Membran im Vergleich zu aus dem Stand der Technik bekannten topfförmigen Membranen eine geringe Trägheit auf.

Ein erfindungsgemäßes Fahrerassistenzsystem für ein Kraftfahrzeug umfasst eine Steuereinrichtung und zumindest einen erfindungsgemäßen Ultraschallsensor.

Grundsätzlich kann es auch vorgesehen sein, dass das Fahrerassistenzsystem eine Mehrzahl von Ultraschallsensoren aufweist. Die Steuereinrichtung kann beispielsweise durch ein elektronisches Steuergerät (ECU - Electronic Control Unit) des Kraftfahrzeugs gebildet sein. Die Steuereinrichtung kann elektrisch mit der Wandlereinrichtung des Ultraschallsensors verbunden sein und eine elektrische Wechselspannung zur Ansteuerung der Wandlereinrichtung bereitstellen. Zudem kann die Steuereinrichtung dazu dienen, eine von der Wandlereinrichtung beim Empfangen des reflektierten Ultraschallsignals erzeugte elektrische Spannung auszuwerten.

Bevorzugt ist die Steuereinrichtung dazu ausgelegt, eine Frequenz, mit welcher die Wandlereinrichtung zum Aussenden des Ultraschallsignals anregbar ist, anzupassen. Das Fahrerassistenzsystem kann ferner eine Sensoreinrichtung umfassen, mittels welcher die Luftfeuchtigkeit und/oder die Temperatur in der Umgebung des Kraftfahrzeugs erfasst werden kann. In Abhängigkeit von der Luftfeuchtigkeit und/oder der Temperatur in der Umgebung des Kraftfahrzeugs kann dann die Frequenz, mit welcher die Wandlereinrichtung zum Aussenden des Ultraschallsignals angeregt wird, angepasst werden. Dadurch, dass die Wandlereinrichtung keinen Membrantopf mit einer vorbestimmten Resonanzfrequenz aufweist, kann die Anregefrequenz und somit die Frequenz des Ultraschallsignals auf einfache Weise angepasst werden. Durch den mechanisch "weichen" Aufbau der Wandlereinrichtung lassen sich somit problemlos andere Anregefrequenzen prägen. Damit kann der Betrieb des Ultraschallsensors an die Umgebungsbedingungen beziehungsweise die Wettereinflüsse angepasst werden.

Weiterhin ist es vorteilhaft, wenn das Fahrerassistenzsystem eine Mehrzahl von Ultraschallsensoren aufweist und die Steuereinrichtung dazu ausgelegt ist, die Mehrzahl von Ultraschallsensoren unabhängig voneinander anzusteuern. Durch die geringe Trägheit der jeweiligen Ultraschallsensoren können diese mit einer verhältnismäßig geringen Ausschwingphase betrieben werden. Dies ermöglicht es, Objekte beziehungsweise Hindernisse im Nahbereich des Sensors zu erfassen. Zudem können - wie bereits erläutert - die Ultraschallsensoren mit unterschiedlichen Frequenzen betrieben werden. Durch die unterschiedlichen Frequenzen können die Ultraschallsignale, die mit den jeweiligen Ultraschallsensoren beziehungsweise deren Wandlereinrichtungen ausgesendet werden, entsprechend codiert werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Dabei kann es vorgesehen sein, dass der zumindest eine Ultraschallsensor des Fahrerassistenzsystems in einer entsprechenden Aussparung eines Stoßfängers des Kraftfahrzeugs angeordnet ist. Hierbei kann es vorgesehen sein, dass die Abdeckeinrichtung bündig zu einer Außenfläche des Stoßfängers angeordnet ist.

Die mit Bezug auf den erfindungsgemäßen Ultraschallsensor vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Mehrzahl von Ultraschallsensoren aufweist;
- Fig. 2: einen Ultraschallsensor gemäß einer ersten Ausführungsform ein einer geschnittenen Seitenansicht; und
- Fig. 3: einen Ultraschallsensor gemäß einer weiteren Ausführungsform in einer geschnittenen Seitenansicht.

In den Figuren werden gleiche und funktionsgleiche Elemente mit den gleichen Bezugszeichen versehen.

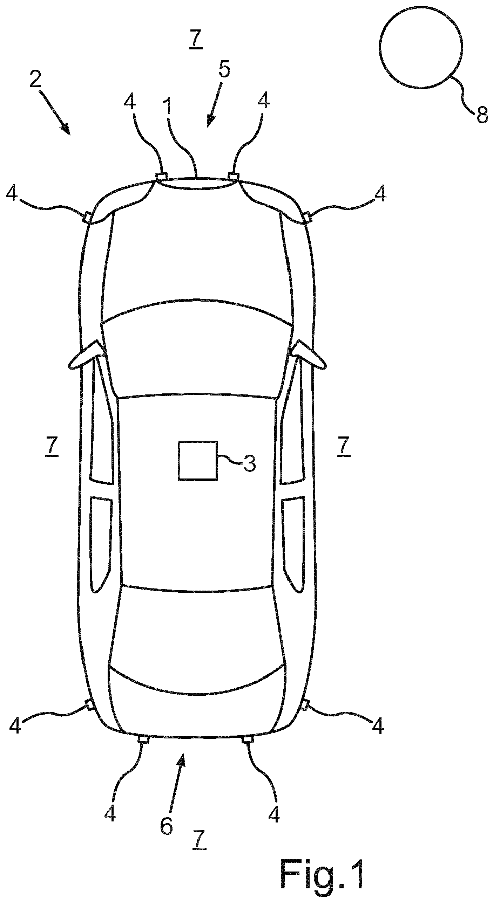

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches wiederum eine Steuereinrichtung 3 umfasst. Die Steuereinrichtung 3 kann beispielsweise durch ein elektronisches Steuergerät (ECU - Electronic Control Unit) des Kraftfahrzeugs 1 gebildet sein. Darüber hinaus umfasst das Fahrerassistenzsystem 2 eine Mehrzahl von Ultraschallsensoren 4.

Vorliegend umfasst das Fahrerassistenzsystem 2 acht Ultraschallsensoren 4, die verteilt an dem Kraftfahrzeug 1 angeordnet sind. Vorliegend sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Die Ultraschallsensoren 4 sind dazu ausgebildet, ein Objekt 8 in einem Umgebungsbereich 7 des Kraftfahrzeugs 1 zu erfassen. Die Ultraschallsensoren 4 dienen insbesondere dazu, einen Abstand zwischen dem Objekt 8 und dem Kraftfahrzeug 1 zu bestimmen. Hierzu kann mit den Ultraschallsensoren 4 jeweils ein Ultraschallsignal während einer Sendephase ausgesendet werden. In einer anschließenden Empfangsphase kann das von dem Objekt 8 reflektierte Ultraschallsignal wieder empfangen werden. Anhand der Laufzeit zwischen dem Aussenden des Ultraschallsignals und dem Empfangen des von dem Objekt 8 reflektierten Ultraschallsignals kann dann mithilfe der Steuereinrichtung 3 der Abstand zwischen dem Kraftfahrzeug 1 und dem Objekt 8 bestimmt werden. Hierzu sind die Ultraschallsensoren 4 jeweils zur Datenübertragung mit der Steuereinrichtung 3 verbunden. Entsprechende Datenleitungen sind vorliegend der Übersichtlichkeit halber nicht dargestellt.

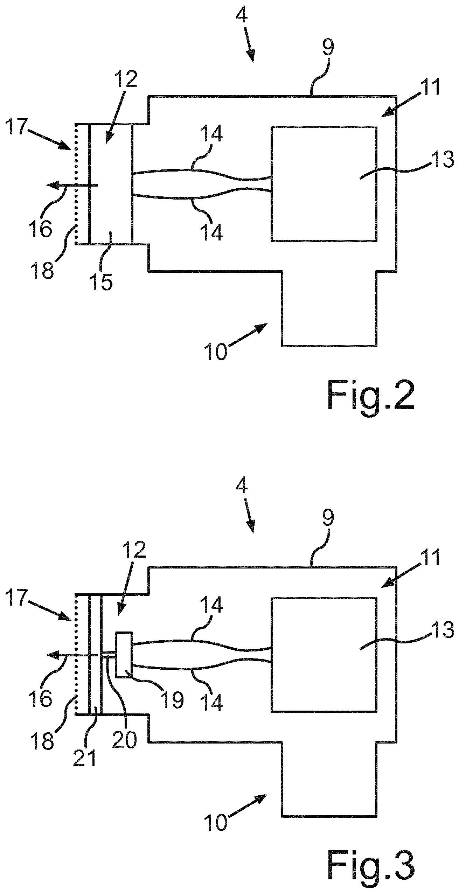

Fig. 2 zeigt einen Ultraschallsensor 4 gemäß einer Ausführungsform der vorliegenden Erfindung in einer geschnittenen Seitenansicht. Der Ultraschallsensor 4 umfasst ein Gehäuse 9, welches beispielsweise aus einem Kunststoff gebildet sein kann. Das Gehäuse 9 umfasst einen Steckeranschluss 10, über welchen es mit einem Fahrzeugdatenbus oder einer Energieversorgung des Kraftfahrzeugs 1 verbunden werden kann. In einem Innenraum 11 des Gehäuses 9 ist eine Wandlereinrichtung 12 angeordnet. Mithilfe der Wandlereinrichtung 12 kann das Ultraschallsignal ausgesendet werden. Die Wandlereinrichtung 12 sendet das Ultraschallsignal entlang einer Hauptsenderichtung 16 aus. Zudem kann mit der Wandlereinrichtung 12 das von dem Objekt 8 reflektierte Ultraschallsignal wieder empfangen werden.

Der Ultraschallsensor 4 umfasst ferner eine Elektronik 13, welche über die Kabel 14 elektrisch mit der Wandlereinrichtung 12 verbunden ist. Mit der Elektronik 13 kann ein Anregungssignal, beispielsweise in Form einer elektrischen Wechselspannung, bereitgestellt werden. Zudem kann eine elektrische Wechselspannung, die mittels der Wandlereinrichtung 12 erzeugt wird, falls das reflektierte Ultraschallsignal auf die Wandlereinrichtung 12 trifft, mithilfe der Elektronik 13 erfasst werden. Die Wandlereinrichtung 12 umfasst vorliegend ein piezoelektrisches Element 15.

Das Gehäuse 9 weist eine Öffnung 17 auf, welche mittels einer Abdeckeinrichtung 18 verschlossen beziehungsweise bedeckt ist. Die Abdeckeinrichtung 18 kann aus einem Material gefertigt sein, welches für das Ultraschallsignal durchlässig ist. Zudem kann die Abdeckeinrichtung 18 aus einem Material gefertigt sein, welches für Wasser undurchlässig ist. Somit kann die Wandlereinrichtung 12 und/oder die Elektronik 13 in dem Innenraum 11 des Gehäuses 9 vor Wasser geschützt werden. Die Abdeckeinrichtung 18 kann zudem verhindern, dass Fremdstoffe beziehungsweise Staub in den Innenraum 11 des Gehäuses gelangen können. Die Abdeckeinrichtung 18 kann beispielsweise aus expandiertem Polytetrafluorethylen (ePTFE) gebildet sein. Insbesondere ist die Abdeckeinrichtung als Folie beziehungsweise Membran ausgebildet.

Fig. 3 zeigt einen Ultraschallsensor 4 gemäß einer weiteren Ausführungsform in einer geschnittenen Seitenansicht. Hierbei umfasst die Wandlereinrichtung 12 einen Elektromagneten 19, der über einen Stößel 20 mit einer Membran 21 gekoppelt ist. Die Membran 21 kann beispielsweise aus einem Metallblech gebildet sein. Die Funktionsweise der Wandlereinrichtung entspricht die der Wandlereinrichtung 12 gemäß Fig. 2.

Im Vergleich zu Ultraschallsensoren 4 gemäß dem Stand der Technik weisen die Ultraschallsensoren 4 gemäß den Ausführungsformen von Fig. 2 und 3 keine topfförmige Membran mit eine verhältnismäßig großen Masse auf. Eine solche Membran, die zu mechanischen Schwingungen angeregt wird, weist eine hohe Trägheit auf. Die in den Fig. 2 und 3 beschriebenen Wandlereinrichtungen 12 weisen eine geringe Trägheit auf. Somit können diese Wandlereinrichtungen 12 mit einer geringen Ausschwingzeit zwischen dem Aussenden des Ultraschallsignals und dem Empfangen des von dem Objekt 8 reflektierten Ultraschallsignals betrieben werden. Zudem können die jeweiligen Wandlereinrichtungen 12 auf einfache Weise mit unterschiedlichen Frequenzen betrieben werden. Dies kann beispielsweise auf eine einfache Weise durch die Anpassung der Anregungsfrequenz beziehungsweise der Anregungsspannung, die mit der Elektronik 13 bereitgestellt wird, ermöglicht werden. Somit kann der Betrieb der Ultraschallsensoren 4 an die Umwelteinflüsse, beispielsweise die Temperatur und/oder die Luftfeuchtigkeit, angepasst werden. Zudem können die mit den jeweiligen Ultraschallsensoren 4 ausgesendeten Ultraschallsignale durch ihre Frequenz codiert werden.

## Patentansprüche

1. Ultraschallsensor (4) für ein Kraftfahrzeug (1), mit einer Wandlereinrichtung (12) zum Aussenden und/oder Empfangen eines Ultraschallsignals und mit einem Gehäuse (9), wobei die Wandlereinrichtung (12) in einem Innenraum (11) des Gehäuses (9) angeordnet ist,
**dadurch gekennzeichnet, dass**
das Gehäuse (9) eine Öffnung (17) aufweist, welche von einer Abdeckeinrichtung (18) verschlossen ist, wobei die Abdeckeinrichtung (18) wasserundurchlässig ausgebildet ist und wobei die Wandlereinrichtung (12) das Ultraschallsignal durch die Abdeckeinrichtung (18) hindurch aussendet und/oder empfängt.

2. Ultraschallsensor (4) nach Anspruch 1,
**dadurch gekennzeichnet, dass**
die Abdeckeinrichtung (18) im Wesentlichen senkrecht zu einer Hauptsenderichtung (16) angeordnet ist, entlang welcher sich das von der Wandlereinrichtung (12) ausgesendete Ultraschallsignal ausbreitet.

3. Ultraschallsensor (4) nach Anspruch 1 oder 2,
**dadurch gekennzeichnet, dass**
die Abdeckeinrichtung (18) aus einem Material gefertigt ist, welches Polytetrafluorethylen, insbesondere expandiertes Polytetrafluorethylen, umfasst.

4. Ultraschallsensor (4) nach einem der vorhergehenden Ansprüche,
**dadurch gekennzeichnet, dass**
die Abdeckeinrichtung (18) als Folie ausgebildet ist.

5. Ultraschallsensor (4) nach einem der vorhergehenden Ansprüche,
**dadurch gekennzeichnet, dass**
die Wandlereinrichtung (12) ein piezoelektrisches Element (15) umfasst.

6. Ultraschallsensor (4) nach einem der vorhergehenden Ansprüche,
**dadurch gekennzeichnet, dass**
die Wandlereinrichtung (12) einen Elektromagneten (19) und eine Membran (21), welcher mit dem Elektromagneten (19) verbunden ist, umfasst.

7. Ultraschallsensor (4) nach einem der vorhergehenden Ansprüche,
**dadurch gekennzeichnet, dass**
der Ultraschallsensor (4) dazu ausgebildet ist, ein Objekt (8) in einem Umgebungsbereich (7) des Kraftfahrzeugs (1) zu erfassen, insbesondere einen Abstand zwischen dem Objekt (8) und dem Kraftfahrzeug (1) zu bestimmen.

8. Fahrerassistenzsystem (2) für ein Kraftfahrzeug (1) mit einer Steuereinrichtung (3) und zumindest einem Ultraschallsensor (4) nach einem der vorhergehenden Ansprüche.

9. Fahrerassistenzsystem (2) nach Anspruch 8,
**dadurch gekennzeichnet, dass**
die Steuereinrichtung (3) dazu ausgelegt ist, eine Frequenz, mit welcher die Wandlereinrichtung (12) zum Aussenden des Ultraschallsignals anregbar ist, anzupassen.

10. Fahrerassistenzsystem (2) nach einem der Ansprüche 8 oder 9,
**dadurch gekennzeichnet, dass**
das Fahrerassistenzsystem (2) eine Mehrzahl von Ultraschallsensoren (4) aufweist und die Steuereinrichtung (3) dazu ausgelegt ist, die Mehrzahl von Ultraschallsensoren (4) unabhängig voneinander anzusteuern.

11. Kraftfahrzeug (1) mit einem Fahrerassistenzsystem (2) nach einem der Ansprüche 8 bis 10.
